# EUROPÄISCHE PATENTSCHRIFT

(11) **EP 1 449 174 B1**
(45) Veröffentlichungstag und Bekanntmachung des Hinweises auf die Patenterteilung: **21.05.2014**
(21) Anmeldenummer: 02802976.7
(22) Anmeldetag: 26.09.2002
(51) Int. Cl.: G07B 15/06, G08G 1/127, G07B 15/02

(54) **ERFASSUNGSSYSTEM FÜR FLÄCHIGE BEREICHE ZUM ERFASSEN VON FAHRZEUGEN MIT GPS**
DETECTION SYSTEM FOR SURFACE AREAS FOR DETECTING VEHICLES WITH A GPS
SYSTEME DE DETECTION EN SURFACE DESTINE A LA DETECTION DE VEHICULES AU MOYEN DE GPS

(30) Priorität: 13.11.2001 DE 10155501
(43) Veröffentlichungstag der Anmeldung: 25.08.2004
(73) Patentinhaber: Kapsch TrafficCom AG, 1120 Wien (AT)
(72) Erfinder: BARKER, Ronald, 81379 München (DE); QUARTIER, Frank, 47533 Kleve (DE)
(74) Vertreter: Weiser, Andreas
(86) Internationale Anmeldenummer: PCT/EP2002/010774
(87) Internationale Veröffentlichungsnummer: WO 2003/042926

(56) Entgegenhaltungen:
- EP-A- 0 730 728
- EP-A- 1 050 853
- WO-A-01/11571
- US-A- 5 694 322

## Beschreibung

### Technisches Gebiet

Die Erfindung betrifft ein Erfassungssystem zum Erfassen von Fahrzeugen mit digitalem Satellitennavigationssystem (GPS) bei der Benutzung von flächigen Bereichen; mit den Merkmalen des Oberbegriffs des Anspruchs 1.

Ferner betrifft die Erfindung ein dazugehöriges Verfahren zum Erfassen von Fahrzeugen mit Satellitennavigationssystem (GPS) bei der Benutzung von flächigen Bereichen.

### Stand der Technik

Für die Nutzung von bestimmten Straßen, wie z.B. Autobahnen, großen Brücken oder Tunneln, werden schon seit langem in einigen Ländern Gebühren erhoben. Diese Straßennutzungsgebühren, auch "Maut" genannt, werden üblicherweise an bestimmten Punkten, bei Autobahnen in der Regel an der Ausfahrt, an Mautstationen fällig. Die Vorgehensweise hierzu kann kurz wie folgt beschrieben werden: Ein Nutzer fährt mit seinem Fahrzeug zunächst an einer Autobahnauffahrt auf die Autobahn auf. Dabei zieht er von einer Mautstation beispielsweise eine Mautkarte, aus der hervorgeht, wo er auf die Autobahn aufgefahren ist. Beim Abfahren wird bei einer Mautstation an der Ausfahrt die zurückgelegte Strecke anhand der Mautkarte ermittelt und die entsprechende Gebühr kassiert.

In anderen Ländern wird für Transitreisende an der Grenze eine Vignette verkauft. Nur Inhaber einer solchen Vignette dürfen bestimmte Straßen, wie beispielsweise Autobahnen, nutzen.

Beide Verfahren haben Vor- bzw. Nachteile. Dieses Gebührenerhebung mit Mautstationen ist relativ personalintensiv, da die fällige Mautgebühr an den Mautstationen von menschlichen Arbeitskräften entgegengenommen wird. Sie ist jedoch auf die wirklich zurückgelegte Strecke bezogen. Ein weiterer Nachteil bei der Erhebung der Straßennutzungsgebühren mit Mautstationen ist, daß bei einem hohen Verkehrsaufkommen die Mautstationen Ausgangspunkte für Verkehrsstaus sind. Die Vignettenlösung ist zwar nicht sonderlich personalintensiv, weil die Vignette in jedem Laden verkauft werden kann, trifft aber alle, auch diejenigen, die die gebührenpflichtige Straße nur relativ kurz nutzen. Diese zahlen dann bereits für die kurze Benutzung einen sehr hohen Preis.

Eine weitere Lösung für die Erhebung von Mautgebühren sind Erfassungssysteme über Funk, bei denen eine Abrechnung in der Regel später erfolgen kann. Aus der europäischen Patentschrift EP 0 730 488 ist ein solches Erfassungssystem bekannt. Die zu erfassenden Fahrzeuge verfügen hier über eine Einrichtung zum Empfangen von Satellitennavigationssignalen. Hiermit wird die jeweilige geographische Position des Fahrzeugs ermittelt. Die entsprechenden Koordinaten werden über Funk an eine Rechnereinrichtung übertragen. Die Rechnereinheit prüft, ob die Position der Koordinaten gebührenpflichtig ist. Im Fall der Gebührenpflichtigkeit wird dies dem Fahrzeug bzw. dessen Halter berechnet.

Diese Arten der Gebührenerfassung sind vorwiegend für die Nutzung von Straßen vorgesehen. Es gibt aber Fälle, wo nicht nur die Straße allein ausreicht, sondern auch Fahrzeuge in einem flächigen Bereich, wie beispielsweise in einer kompletten Innenstadt, erfaßt werden sollen.

Die EP 1 050 853 A1 beschreibt ein Gebührenerfassungssystem für Fahrzeuge beim Nutzen von gebührenpflichtigen Gebieten, wie etwa einen Innenstadtbereich. Ein Positionserfassungsgerät in einem Fahrzeug ermittelt anhand von GPS-Signalen die aktuelle Position des Fahrzeugs und speichert diese zusammen mit einer Zeitangabe in einem Speicher. Anschließend fordert eine zentrale Gebührenerfassungsvorrichtung diese gespeicherten Daten über eine Funkverbindung von dem Positionserfassungsgerät an und stellt mittels einer digitalen Karte fest, ob und wie lange das Fahrzeug in einem gebührenpflichtigen Gebiet bewegt wurde. Dabei können Gebiete durch Kreissegmente oder Polygone begrenzt werden. Mit der ermittelten Aufenthaltsdauer in dem Gebiet erfolgt eine Gebührenberechnung für das Fahrzeug.

In der WO 95/14909 wird eine Einrichtung in einem Fahrzeug zum Feststellen des Befahrens einer Strecke in einem Straßennetz offenbart. Dazu werden auf einer digitalen Karte Punkte auf der Strecke festgelegt und die Strecke in Segmente unterteilt. Die Einrichtung im Fahrzeug bestimmt mittels GPS die aktuelle Position des Fahrzeugs. Erst wenn sich das Fahrzeug nacheinander in einem Toleranzbereich um mehrere dieser Segmente befunden hat, wird eine Benutzung der Strecke festgestellt. Auf diese Weise werden Fehler durch Ungenauigkeiten der GPS-Ortung vermieden.

Die US 5,694,322 beschreibt ebenfalls eine Vorrichtung zur Gebührenermittlung für ein Fahrzeug bei der Benutzung einer gebührenpflichtigen Strecke. Dazu umfasst die Vorrichtung eine Positionsbestimmungseinrichtung und einen Wegemesser im Fahrzeug. Die Positionsbestimmungseinrichtung bestimmt beispielsweise mittels GPS die jeweilige Position des Fahrzeugs. Die ermittelten Daten können Über eine Funkverbindung periodisch an eine zentrale Rechnereinheit übermittelt werden. Die Rechnereinheit bestimmt anhand der Übermittelten Daten und einer digitalen Karte die angefallenen Gebühren.

In der WO 01l11571 A1 wird ein weiteres Mautsystem zur zentralen Erhebung von Nutzungsgebühren für Fahrzeuge in einem gebührenpflichtigen Wegstreckennetz dargestellt. Mit entsprechenden Einrichtungen im Fahrzeug wird die jeweilige Position des Fahrzeugs, z.B. mit GPS, bestimmt und über ein öffentliches Mobilfunknetz an eine Rechnerzentrale übermittelt. Die Rechnerzentrale erhebt an anhand der übermittelten Positionen und unter Verwendung einer digitalen Karte mit gekennzeichneten gebührenpflichtigen Straßen entsprechende Nutzungsgebühren.

### Offenbarung der Erfindung

Aufgabe der Erfindung ist es daher, die Nachteile des Standes der Technik zu beseitigen und ein System und ein Verfahren zu schaffen, bei dem in flächigen Bereichen, wie es z.B. insbesondere Stadtbereiche darstellen, Fahrzeuge erfaßt werden. Dabei soll der verbrauchte Speicherplatz in dem Rechner des Erfassungssystems möglichst optimiert ausgenutzt werden.

Erfindungsgemäß wird die Aufgabe dadurch gelöst, daß bei einem Erfassungssystem zum Erfassen von Fahrzeugen mit digitalem Satellitengestütztem Positionsermittlungssystem bei der Benutzung zumindest eines gebührenpflichtigen flächigen Bereichs, insbesondere einer Stadt oder eines Teils davon, mit den Merkmalen des Anspruchs 1.

Weiterhin wird die Aufgabe durch ein dazugehöriges Verfahren mit den Verfahrensschritten des Anspruchs 7 gelöst.

Durch das erfindungsgemäße Erfassungssystem und das entsprechende Verfahren wird es nun möglich, auf einfache Weise ganze flächige Bereiche zu überwachen, ohne die einzelnen Straßen in den flächigen Bereichen kontrollieren zu müssen. Die Verwendung von flächigen Bereichen bringt den Vorteil, daß erheblich weniger Speicherplatz in dem Rechner des Erfassungssystems verbraucht wird, als es bei der digitalen Speicherung von Straßenkarten der Fall ist.

In dem erfindungsgemäßen Erfassungssystem sind Mittel vorgesehen, die die Erfassung des Fahrzeugs bei Eintritt des GPS-Koordinatensignals in den ausgewählten flächigen Bereich aktivieren. Entsprechend sind Mittel vorgesehen, die die Erfassung des Fahrzeugs bei Austritt des GPS-Koordinatensignals aus dem flächigen Bereich deaktivieren.

Das Erfassungssystem erweist sich als besonders geeignet, wenn es sich bei den ausgewählten Bereichen um Städte, bzw. Teile von Städten, handelt.

Um eine eindeutige Zuordnung der Koordinaten zu einem Fahrzeug zu erhalten, ist es vorteilhaft, wenn Identifizierungsmittel vorgesehen sind, welche ein Identifizierungssignal zum eindeutigen Identifizieren eines erfaßten Fahrzeugs an das Erfassungssystem senden.

Erfindungsgemäß sind Mittel für eine Gebührenzuordnung für die erfaßten Fahrzeuge vorgesehen. Hiermit wird das Erfassungssystem für eine Gebührenüberwachung genutzt. Fahrzeuge, deren Koordinaten in einen überwachten Bereich kommen, müssen ggf. Gebühren bezahlen.

Eine vorteilhafte Weiterbildung der Erfindung ergibt sich durch Mittel zum Optimieren bzw. Reduzieren der Datenmengen. Beispielsweise durch geeignete Kompressionen der Daten und durch optimierte Auswahl der Polygonenzüge, welche den zu erfassenden Bereich abdecken, können die Datenmengen erheblich reduziert werden. Geringere Daten bedeuten immer eine schnellere Abarbeitungszeit. Hierdurch wird das System schneller. Erfindungsgemäß wird eine zu überwachende Fläche von einem Rechteck umschlossen.

Damit nicht gleich jedes Fahrzeug erfaßt wird, welches beispielsweise die zu überwachende Fläche nur tangiert, sind vorteilhafterweise Mittel zum Festlegen eines Toleranzbereiches vorgesehen, in dem die Aktivierung bzw. Deaktivierung der Erfassung des Fahrzeugs erfolgt.

In dem erfindungsgemäßen Erfassungssystem liegt die digitale Karte als Vektordaten vor. Dadurch gehen bei verschiedenen Vergrößerungen oder Verkleinerungen keine Informationen verloren, wie es beispielsweise bei einer Pixelgrafik der Fall wäre.

Um festzustellen, wie lange ein Fahrzeug sich in einem zu überwachenden Bereich aufhält, können vorteilhafterweise Mittel vorgesehen sein, die die Aufenthaltsdauer eines erfaßten Fahrzeugs in dem relevanten flächigen Bereich ermitteln. Damit kann ggf. auch eine zeitabhängige Gebührenzuordnung erfolgen.

Es kann sich als vorteilhaft erweisen, wenn ein relevanter flächiger Bereich in Zonen unterteilt ist, wobei jede Zone von einem Polygonenzug umschlossen ist. Durch diese Maßnahme können beispielsweise unterschiedliche Gebührentarife zugrundegelegt werden.

In Ausgestaltung des erfindungsgemäßen Verfahrens erweist sich als vorteilhaft, wenn Städte als relevante Flächen ausgewählt werden. Bei dem erfiridungsgemäßen Verfahren wird die Erfassung des Fahrzeugs erst bei Eintritt des GPS-Koordinatensignals in den flächigen Bereich aktiviert. Entsprechend wird die Erfassung des Fahrzeugs bei Austritt des GPS-Koordinatensignals aus dem flächigen Bereich deaktiviert. Durch diese Maßnahme spricht das Erfassungssystem nur dann an, wenn es benötigt wird. Dadurch werden Kapazitäten in der Rechnereinheit des Erfassungssystems frei. Dies wirkt sich auf die Verarbeitungsgeschwindigkeit aus.

Ferner wird in geeigneter Weise das Identifizierungssignal zum eindeutigen Identifizieren eines erfaßten Fahrzeugs an das Erfassungssystem gesendet. Neben dem Identifizierungssignal besteht zudem die Möglichkeit, eine Klassifikationsinformation mitzusenden, um beispielsweise im Erfassungssystem festzustellen, ob es sich um einen Lastkraftwagen, einen Personenwagen, ein Motorrad oder um ein landwirtschaftlich genutztes Fahrzeug handelt, welches in den zu überwachenden Bereich einfährt.

Bevorzugterweise werden bei dem erfindungsgemäßen Verfahren Gebühren einem durch das Erfassungssystem erfaßten Fahrzeug zugeordnet. Das erfindungsgemäße Verfahren läßt sich dadurch ausgestalten, daß ein flächiger Bereich in Zonen unterteilt wird, wobei jede Zone von einem Polygonenzug umschlossen ist. Hierdurch läßt sich insbesondere jeder Zone ein eigener Gebührentarif zuordnen.

Das erfindungsgemäße Verfahren enthält vorteilhafterweise eine Datenoptimierung bzw. Datenreduzierung. Hierdurch können die Datenmengen reduziert werden, die bei dem Rechner des Erfassungssystems anfallen. Die Geschwindigkeit des Systems wird damit erhöht. Um eine einfachere Verarbeitung im Rechner mit zu erhalten, wird die digitale Karte und/oder der, eine Fläche umschließende, Polygonenzug als Vektordaten im Speicher der Rechnereinheit abgespeichert.

Ferner wird in einer bevorzugten Variante des erfindungsgemäßen Verfahrens ein Toleranzbereich festgelegt, in dem die Aktivierung bzw. Deaktivierung der Erfassung eines Fahrzeugs erfolgt. Hierdurch wird erreicht, daß Fahrzeuge, die den zu erfassenden Bereich beispielsweise nur tangieren, nicht notwendigerweise diesem zugeordnet werden. Bei dem erfindungsgemäßen Verfahren wird der, eine Fläche umschließende, Polygonenzug als Rechteck ausgebildet.

Weitere Vorteile ergeben sich aus dem Gegenstand der Unteransprüche.

### Kurze Beschreibung der Zeichnung

- Fig. 1: zeigt einen flächigen Bereich, der von einem Rechteck zur Überwachung abgedeckt wird.
- Fig. 2: zeigt einen flächigen Bereich, der von einem Polygonenzug zur Überwachung abgedeckt wird (nicht beanspruchte Ausgestaltung).
- Fig. 3: zeigt einen flächigen Bereich, der von mehreren Polygonenzügen als Zonen zur Überwachung abgedeckt wird.
- Fig. 4: zeigt den prinzipiellen Verfahrensablauf eines erfindungsgemäßen Verfahrens.

### Bevorzugtes Ausführungsbeispiel

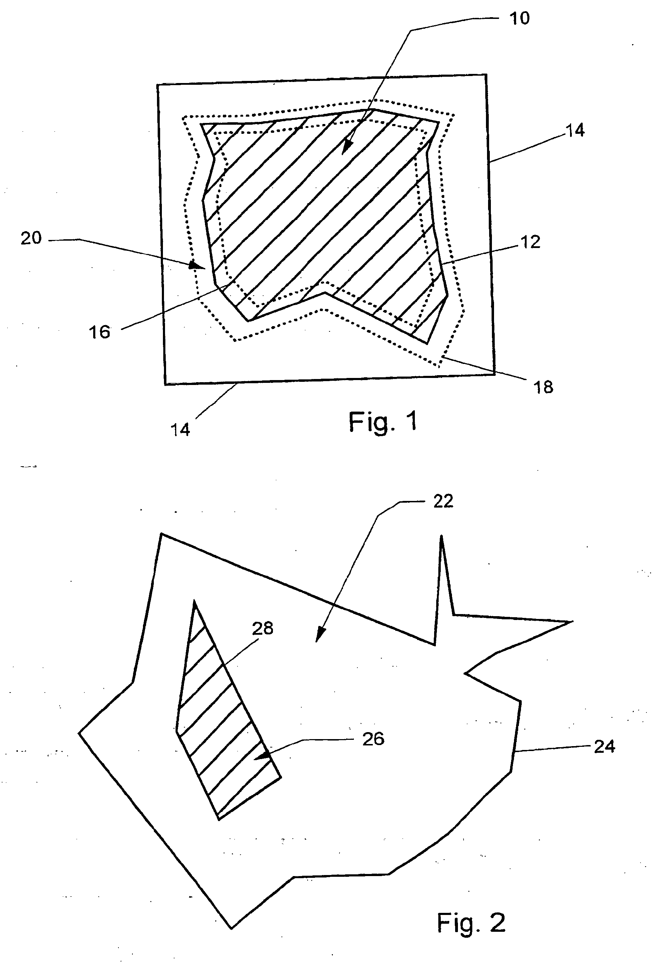

In Fig. 1 wird mit 10 ein flächiger Bereich bezeichnet. Der flächige Bereich 10 ist mit einem gestrichelten Polygonenzug 12 gekennzeichnet. Dieser flächige Bereich 10 kann beispielsweise die Fläche einer Stadt sein. Um Fahrzeuge zu erfassen, die in die Stadt fahren, um diesem eine Gebühr dafür zu berechnen, wird ein erfindungsgemäßes Erfassungssystem verwendet.

Das Erfassungssystem verfügt über eine Straßenkarte in Vektordarstellung, wie sie beispielsweise auch in dem Speicher einer Rechnereinheit eines erfindungsgemäßen Erfassungssystems vorliegt. Prinzipiell wird von Vektordarstellung dann gesprochen, wenn die Straßenkarte aus lauter Koordinaten besteht, die zur Darstellung lediglich mit Linien verbunden werden. Die Koordinaten der Karte werden in Tabellen gespeichert. Durch geeignete Koordinatentransformation können so Ausschnitte in beliebiger Größe dargestellt werden, ohne bei der Vergrößerung oder Verkleinerung Informationen zu verlieren, wie es beispielsweise bei einer Pixelgrafik der Fall wäre.

Ein erfindungsgemäßes Erfassungssystem dient dazu, diejenigen Kraftfahrzeuge zu erfassen, die gebührenpflichtige Flächen, wie es beispielsweise Innenstädte bilden können, nutzen.

Fahrzeuge des vorliegenden Ausführungsbeispiels von Fig. 1 sind mit einem Satellitennavigationssystem (GPS= "Global Positioning System") ausgerüstet. Über das Satellitennavigationssystem werden die Koordinaten der augenblicklichen Position des Fahrzeugs ermittelt. Solche Fahrzeuge sind in der Lage, beispielsweise über Funk, kontinuierlich die Koordinaten ihrer Position an das Erfassungssystem zu senden. Neben den Koordinatensignalen müssen die Fahrzeuge jedoch auch Identifikationssignale senden, mit denen das Fahrzeug eindeutig durch das Erfassungssystem identifiziert werden kann. Das Erfassungssystem weist eine geeignete Empfangs- und Verarbeitungseinrichtung auf, -um die Koordinaten- und Identifikationssignale zu empfangen und zu verarbeiten. Die Verarbeitungseinrichtung besteht aus einem oder mehreren Rechnern, die ggf. untereinander vernetzt sind. In den Speichern der Rechner liegt das digitale Kartenmaterial vor, das u.a. von kommerziellen Anbietern angeboten wird. In Fig. 1 wird somit quasi ein digitales Abbild eines Kartenausschnitts als Polygonenzug 12 in Vektorform dargestellt.

Über den flächigen Bereich 10, der überwacht werden soll, wird in der einfachsten Form ein digitales Rechteck 14 gelegt. Die Fläche des digitalen Polygonenzug 12 ist in vorliegendem Ausführungsbeispiel schraffiert dargestellt. Diese Geometrie des Rechtecks hat den Vorteil, daß möglichst wenig Speicherplatz verbraucht wird. Ferner kann diese Geometrie sehr leicht verarbeitet werden. Sobald die an das Erfassungssystem übermittelten Koordinaten eines Fahrzeugs in dieses Rechteck 14 gelangen, wird eine Erfassung für dieses Fahrzeug aktiviert. Sobald das Fahrzeug dann in den Polygonenzug 12 gelangt, werden dann die Straßennutzungsgebühren fällig. Erst beim Verlassen des Rechtecks 14 wird die Gebührenerfassung deaktiviert. Anhand des Identifikationssignals, welches von dem Fahrzeug übermittelt wird, kann dem Fahrzeug nun eindeutig die Gebühr für den Aufenthalt in dem Polygonenzug 12 berechnet werden. Die Gebühr kann sich z.B. über die Dauer des Aufenhalts in dem Polygonenzug 12 berechenen.

Ein kleinerer Polygonenzug 16 und ein größerer Polygonenzuge 18 gegenüber dem Polygonenzug 12 bilden einen Toleranzbereich 20, in dem die Gebührenerfassung das Erfassungssystem anspricht. Die Polygonenzüge 16 und 18 sind durch gestrichelte Linien kenntlich gemacht. In Kombination mit anderen Parametern, wie z.B. Aufenthaltsdauer in dem Toleranzbereich 20, kann ein Kriterium geschaffen werden, ob ein Fahrzeug in diesem Bereich erfaßt werden soll, um Gebühren zu zahlen oder nicht.

Fig. 2 zeigt, daß auch eine andere nicht beanspruchte Geometrie zur Abdeckung einer zu überwachenden Fläche 10, als die des Polygonenzug 14 - siehe Fig. 1 - möglich ist. Eine zu überwachende Fläche 22 wird von einem Polygonenzug 24 umgeben. Das besondere in diesem nicht beanspruchten Ausführungsbeispiel, welches ansonsten auf gleiche Weise funktioniert wie das Ausführungsbeispiel von Fig. 1, ist, daß ein flächiger Bereich 26 von der Überwachung durch das erfindungsgemäße Erfassungssystem ausgespart werden kann. Der ausgesparte flächige Bereinch 26 ist schraffiert dargestellt und mit einem Polygonenzug 28 umgeben.

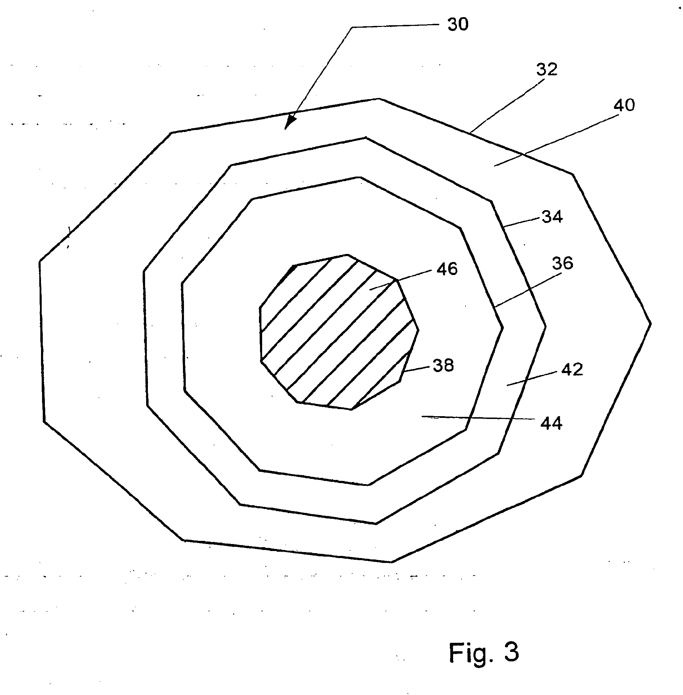

Fig. 3 zeigt einen flächigen Bereich 30, der von mehreren Polygonenzügen 32, 34, 36, 38 zur Überwachung abgedeckt wird. Grundsätzlich funktioniert dieses Ausführungsbeispiel wie die vorherigen Ausführungsbeispiele von Fig. 1 und 2. Im Unterschied zu den vorherigen. Ausführungsbeispielen werden, wenn man einmal von der Geometrie der Polygonenzüge absieht, Zonen gebildet. Jeder der Polygonenzüge 32, 34, 36, 38 bildet zum nächsten Polygenenzug eine Zone 40, 42, 44. Der innerste Polygonenzug bildet eine eigene Zone 46, welche schraffiert dargestellt ist. Jeder Zone 40, 42, 44, 46 kann eine eigene Tarifstruktur für eine Gebührenberwachung zugeordnet werden. Auf diese Weise kann einem Fahrzeug, je nach dem in welcher Zone 40, 42, 44, 46 es sich aufhält, eine entsprechende Aufenthaltsgebühr auferlegt werden.

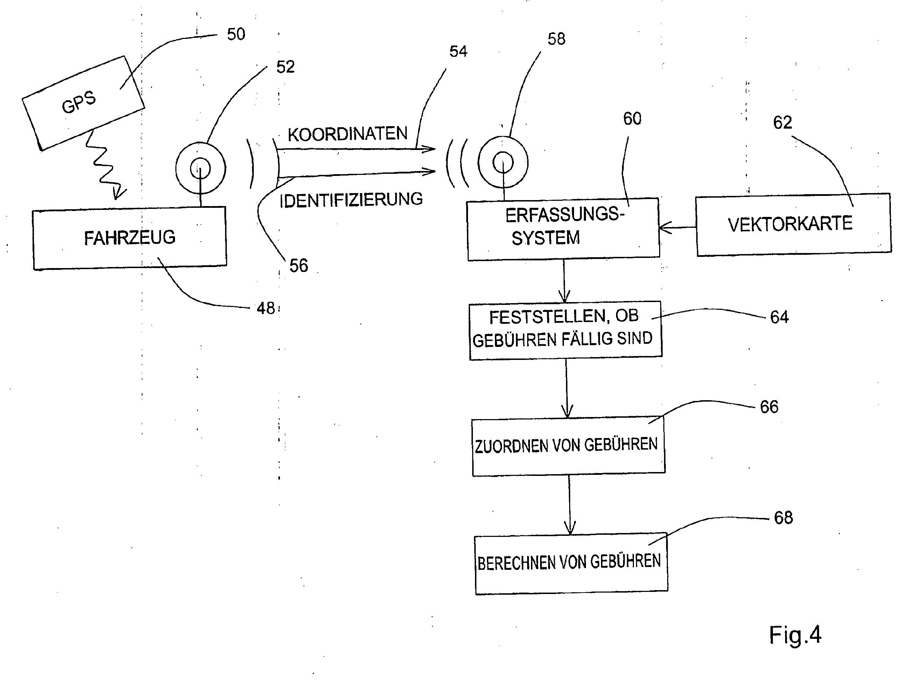

Anhand von Fig. 4 soll kurz die prinzipielle Funktionsweise des erfindungsgemäßen Erfassungssystems bzw. des Verfahrens zum Erfassen von Fahrzeugen erläutert werden, wie bereits weiter oben angedeutet. Ein Fahrzeug 48 erhält von einem Satellitennavigationssystem 50 Daten bezüglich seiner genauen Position. Über Funk 52 sendet das Fahrzeug 48 die Positionskoordinaten, Pfeil 54, und ein individuelles Identifizierungssignal, Pfeil 56. Diese Positionskoordinaten 54 und das Identifizierungssignal 56 werden von einer Empfangseinrichtung 58 eines Erfassungssystems 60 empfangen. In dem Erfassungssystem wird anhand einer geographischen Karte 62 in Vektordarstellung festgestellt (wie zu Fig. 1 bis 3 beschrieben), ob für die augenblickliche Position des Fahrzeugs 48 Gebühren fällig sind, Kasten 64. Wenn Gebühren fällig sind; werden dem Konto des Fahrzeugs, welches durch das Identifizierungssignal 56 identifiziert wurde, Flächennutzungsgebühren zugeordenet, Kasten 66. Anschließend kann automatisch dem Halter des Fahrzeugs eine Rechnung zugestellt werden, Kasten 68.

## Patentansprüche

1. Erfassungssystem (60) zum Erfassen von Fahrzeugen (48) mit digitalem satellitengestütztem Positionsermittlungssystem bei der Benutzung zumindest eines gebührenpflichtigen flächigen Bereichs (10), insbesondere einer Stadt oder eines Teils davon, umfassend:
eine Rechnereinheit mit einem Speicher, in welchem eine digitale Karte in Vektordarstellung vorliegt, wobei der gebührenpflichtige flächige Bereich (10) in der Karte mit zumindest einem Polygonzug (12) eingegrenzt ist;
eine Empfangseinheit (58) zum kontinuierlichen Empfangen von mithilfe des satellitengestützten Positionsermittlungssystems bestimmten Positionskoordinaten (54) eines Fahrzeugs (48) von dem Fahrzeug (48); und
Erfassungsmittel zum Erfassen des Fahrzeugs (48) als gebührenpflichtig, sobald die empfangenen Positionskoordinaten (54) in den zumindest einen Polygonzug (12) gelangen,
**gekennzeichnet durch**
Mittel zum Vergleichen der empfangenen Positionskoordinaten (54) mit einem um den zumindest einen Polygonzug (12) gelegten digitalen Rechteck (14) in Vektordarstellung und zum Aktivieren der Erfassungsmittel, wenn die empfangenen Positionskoordinaten (54) in das Rechteck gelangen, und Deaktivieren der Erfassungsmittel, wenn die empfangenen Positionskoordinaten (54) das Rechteck verlassen.

2. Erfassungssystem nach Anspruch 1, **dadurch gekennzeichnet, dass** das Erfassungssystem ferner dafür ausgebildet ist, ein von der Empfangseinheit (58) empfangenes Identifizierungssignal (56) zum eindeutigen Identifizieren eines Fahrzeugs (48) zu verwenden.

3. Erfassungssystem nach einem der Ansprüche 1 oder 2, **dadurch gekennzeichnet, dass** Mittel zum Festlegen eines Toleranzbereiches (20) um einen Polygonzug (12) vorgesehen sind, in welchem Toleranzbereich (20) das Erfassen eines Fahrzeugs (48) als gebührenpflichtig von zumindest einem weiteren Parameter abhängig ist.

4. Erfassungssystem nach einem der Ansprüche 1 bis 3, **gekennzeichnet durch** Mittel zum Ermitteln der Aufenthaltsdauer eines gebührenpflichtigen Fahrzeugs (48) in dem gebührenpflichtigen flächigen Bereich (10).

5. Erfassungssystem nach einem der Ansprüche 1 bis 4, **dadurch gekennzeichnet, dass** ein gebührenpflichtiger flächiger Bereich (30) in Zonen (40, 42, 44, 46) unterteilt ist, wobei jede Zone (40, 42, 44, 46) von einem Polygonzug (32,34, 36, 38) umschlossen ist.

6. Erfassungssystem nach Anspruch 5, **dadurch gekennzeichnet, dass** jeder Zone (40, 42, 44, 46) ein eigener Gebührentarif zugeordnet ist.

7. Verfahren zum Erfassen von Fahrzeugen (48) mit satellitengestütztem Positionsermittlungssystem bei der Benutzung zumindest eines gebührenpflichtigen flächigen Bereichs (10), insbesondere einer Stadt oder eines Teils davon, mit folgenden, in einem Erfassungssystem (60) ausgeführten Verfahrensschritten:
Eingrenzen eines gebührenpflichtigen flächigen Bereichs (10) in einer digitalen Karte mit zumindest einem Polygonzug (12), wobei die digitale Karte in Vektordarstellung in einem Speicher einer Rechnereinheit des Erfassungssystems (60) vorliegt;
Legen eines digitalen Rechtecks (14) in Vektordarstellung um den zumindest einen Polygonzug (12);
kontinuierliches Empfangen von mithilfe des satellitengestützten Positionsermittlungssystems bestimmten Positionskoordinaten (54) eines Fahrzeugs (48) von dem Fahrzeug (48) und jeweils Vergleichen der empfangenen Positionskoordinaten (54) mit dem digitalen Rechteck; und,
wenn die empfangenen Positionskoordinaten (54) in das Rechteck gelangen: Aktivieren des Überwachens, ob die empfangenen Positionskoordinaten (54) in den zumindest einen Polygonzug (12) gelangen, und wenn ja, Erfassen des Fahrzeugs (48) mit dem Erfassungssystem (60) als gebührenpflichtig; und,
wenn die empfangenen Positionskoordinaten (54) das Rechteck verlassen: Beenden des Überwachens.

8. Verfahren zum Erfassen von Fahrzeugen (48) nach Anspruch 7, **dadurch gekennzeichnet, dass** das Erfassungssystem (60) vom Fahrzeug (48) ferner ein Identifizierungssignal (56) empfängt und zum eindeutigen Identifizieren des Fahrzeugs (48) verwendet.

9. Verfahren zum Erfassen von Fahrzeugen (48) nach Anspruch 7 oder 8, **dadurch gekennzeichnet, dass** ein gebührenpflichtiger flächiger Bereich in Zonen (40, 42, 44, 46) unterteilt wird, wobei jede Zone (40, 42, 44, 46) von einem Polygonzug (32, 34, 36, 38) umschlossen ist.

10. Verfahren zum Erfassen von Fahrzeugen (48) nach Anspruch 9, **dadurch gekennzeichnet, dass** jeder Zone (40, 42, 44, 46) ein eigener Gebührentarif zugeordnet wird.

11. Verfahren zum Erfassen von Fahrzeugen (48) nach einem der Ansprüche 7 bis 10, **dadurch gekennzeichnet, dass** um einen Polygonzug (12) ein Toleranzbereich (20) festgelegt wird, in welchem das Erfassen eines Fahrzeugs (48) als gebührenpflichtig von zumindest einem weiteren Parameter abhängig gemacht wird.

12. Verfahren zum Erfassen von Fahrzeugen (48) nach einem der Ansprüche 7 bis 11, **dadurch gekennzeichnet, dass** die Aufenthaltsdauer eines gebührenpflichtigen Fahrzeugs (48) in dem gebührenpflichtigen flächigen Bereich (10) ermittelt wird.

## Claims

1. A detection system (60) for detecting vehicles (48) with a digital satellite-assisted position-determining system in the event of use of at least one chargeable surface area (10), in particular of a town or part thereof, comprising:
a computer unit with a memory, in which a digital card is present in vector presentation, wherein the chargeable surface area (10) is delimited in the card by at least one polyline (12);
a receiving unit (58) for continuously receiving, with the aid of the satellite-assisted position-determining system, determined position coordinates (54) of a vehicle (48) from the vehicle (48); and
detection means for detecting the vehicle (48) as liable for charges as soon as the received position coordinates (54) enter the at least one polyline (12),
**characterised by**
means for comparing the received position coordinates (54) with a digital rectangle (14) in vector presentation placed around the at least one polyline (12) and for activating the detection means when the received position coordinates (54) enter the rectangle, and for deactivating the detection means when the received position coordinates (54) leave the rectangle.

2. The detection system according to Claim 1, **characterised in that** the detection system is further designed to use an identification signal (56) received from the receiving unit (58) to unambiguously identify a vehicle (48).

3. The detection system according to one of Claims 1 or 2, **characterised in that** means for defining a tolerance range (20) around a polyline (12) are provided, in which tolerance range (20) the detection of a vehicle (48) as being liable for charges is dependent on at least one further parameter.

4. The detection system according to one of Claims 1 to 3, **characterised by** means for establishing the length of stay of a vehicle (48) liable for charges in the chargeable surface area (10).

5. The detection system according to one of Claims 1 to 4, **characterised in that** a chargeable surface area (30) is divided into zones (40, 42, 44, 46), wherein each zone (40, 42, 44, 46) is surrounded by a polyline (32, 34, 36, 38).

6. The detection system according to Claim 5, **characterised in that** each zone (40, 42, 44, 46) is assigned its own tariff of charges.

7. A method for detecting vehicles (48) with a satellite-assisted position-determining system in the event of use of at least one chargeable surface area (10), in particular of a town or part thereof, comprising the following method steps performed in a detection system (60):
delimiting a chargeable surface area (10) in a digital card with at least one polyline (12), wherein the digital card is present in vector presentation in a memory of a computer unit of the detection system (60);
placing a digital rectangle (14) in vector presentation around the at least one polyline (12);
continuously receiving, with the aid of the satellite-assisted position-determining system, determined position coordinates (54) of a vehicle (48) from the vehicle (48) and comparing the received position coordinates (54) each with the digital rectangle; and,
when the received position coordinates (54) enter the rectangle: activating the monitoring process to establish whether the received position coordinates (54) enter the at least one polyline (12), and, if so, detecting the vehicle (48) with the detection system (60) as liable for charges; and,
when the received position coordinates (54) leave the rectangle: ending the monitoring process.

8. The method for detecting vehicles (48) according to Claim 7, **characterised in that** the detection system (60) further receives from the vehicle (48) an identification signal (56) and uses this to unambiguously identify the vehicle (48).

9. The method for detecting vehicles (48) according to Claim 7 or 8, **characterised in that** a chargeable surface area is divided into zones (40, 42, 44, 46), wherein each zone (40, 42, 44, 46) is surrounded by a polyline (32, 34, 36, 38).

10. The method for detecting vehicles (48) according to Claim 9, **characterised in that** each zone (40, 42, 44, 46) is assigned its own tariff of charges.

11. The method for detecting vehicles (48) according to one of Claims 7 to 10, **characterised in that** a tolerance range (20) is defined around a polyline (12), in which tolerance range the detection of a vehicle (48) as being liable for charges is dependent on at least one further parameter.

12. The method for detecting vehicles (48) according to one of Claims 7 to 11, **characterised in that** the length of stay of a vehicle (48) liable for charges in the chargeable surface area (10) is established.

## Revendications

1. Système de détection (60) pour la détection de véhicules (48) avec un système de détermination de position assisté par satellite, lors de l'utilisation d'au moins une région plane soumise à une redevance (10), en particulier une ville ou une partie de celle-ci, comprenant :
une unité de calcul avec une mémoire, dans laquelle est prévue une carte numérique dans une représentation vectorielle, la région plane soumise à une redevance (10) est délimitée sur la carte par au moins une ligne polygonale (12) ;
une unité de réception (58) pour la réception continue, par un véhicule (48), des coordonnées de position (54) du véhicule (48) déterminées à l'aide du système de détermination de position assisté par satellite ; et
des moyens de détection pour la détection du véhicule (48) comme étant soumis à une redevance, dès que les coordonnées de position (54) reçues parviennent dans l'au moins une ligne polygonale (12),
**caractérisé par**
des moyens pour la comparaison des coordonnées de position (54) reçues avec un rectangle numérique (14) placé autour de l'au moins une ligne polygonale (12) dans une représentation vectorielle, et pour l'activation des moyens de détection lorsque les coordonnées de position (54) reçues parviennent dans le rectangle, et pour la désactivation des moyens de détection lorsque les coordonnées de position (54) reçues quittent le rectangle.

2. Système de détection selon la revendication 1, **caractérisé en ce que** le système de détection est en outre conçu pour utiliser un signal d'identification (56) reçu par l'unité de réception (58) pour l'identification univoque d'un véhicule (48).

3. Système de détection selon l'une des revendications 1 ou 2, **caractérisé en ce qu'**il est prévu des moyens pour la fixation d'une plage de tolérance (20) autour d'une ligne polygonale (12), dans laquelle plage de tolérance (20) la détection d'un véhicule (48) comme étant soumis à une redevance dépend d'au moins un paramètre supplémentaire.

4. Système de détection selon l'une des revendications 1 à 3, **caractérisé par** des moyens pour la détermination de la durée de séjour d'un véhicule (48) soumis à une redevance dans la région plane soumise à une redevance (10).

5. Système de détection selon l'une des revendications 1 à 4, **caractérisé en ce qu'**une région plane soumise à une redevance (30) est divisée en zones (40, 42, 44, 46), chaque zone (40, 42, 44, 46) étant encerclée par une ligne polygonale (32, 34, 36, 38).

6. Système de détection selon la revendication 5, **caractérisé en ce qu'**un tarif propre est attribué à chaque zone (40, 42, 44, 46).

7. Procédé pour la détection de véhicules (48) avec un système de détermination de position assisté par satellite, lors de l'utilisation d'au moins une région plane soumise à une redevance (10), en particulier une ville ou une partie de celle-ci, avec les étapes de procédé suivantes, exécutées dans un système de détection (60) :
délimitation d'une région plane soumise à une redevance (10) sur une carte numérique avec au moins une ligne polygonale (12), la carte numérique étant disponible dans une représentation vectorielle dans une mémoire d'une unité de calcul du système de détection (60) ;
disposition d'un rectangle numérique (14) dans une représentation vectorielle autour de l'au moins une ligne polygonale (12) ;
réception continue, par un véhicule (48), de coordonnées de position (54) du véhicule (48) déterminées à l'aide du système de détermination de position assisté par satellite, et comparaison respective des coordonnées de position (54) avec le rectangle numérique ; et
lorsque les coordonnées de position (54) reçues parviennent dans le rectangle : activation de la surveillance de la présence des coordonnées de position (54) reçues dans l'au moins une ligne polygonale (12), et si oui, détection du véhicule (48) comme étant soumis à une redevance avec le système de détection (60) ; et
lorsque les coordonnées de position (54) reçues quittent le rectangle : arrêt de la surveillance.

8. Procédé pour la détection de véhicules (48) selon la revendication 7, **caractérisé en ce que** le système de détection (60) reçoit en outre un signal d'identification (56) de la part du véhicule (48) et utilise celui-ci pour l'identification univoque du véhicule (48).

9. Procédé pour la détection de véhicules (48) selon la revendication 7 ou 8, **caractérisé en ce qu'**une région plane soumise à une redevance est divisée en zones (40, 42, 44, 46), chaque zone (40, 42, 44, 46) étant encerclée par une ligne polygonale (32, 34, 36, 38).

10. Procédé pour la détection de véhicules (48) selon la revendication 9, **caractérisé en ce qu'**un tarif propre est attribué à chaque zone (40, 42, 44, 46).

11. Procédé pour la détection de véhicules (48) selon l'une des revendications 7 à 10, **caractérisé en ce qu'**une plage de tolérance (20) est fixée autour d'une ligne polygonale (12), dans laquelle la détection d'un véhicule (48) comme étant soumis à une redevance dépend d'au moins un paramètre supplémentaire.

12. Procédé pour la détection de véhicules (48) selon l'une des revendications 7 à 11, **caractérisé par** la détermination de la durée de séjour d'un véhicule (48) soumis à une redevance dans la région plane soumise à une redevance (10).
